Europäisches Patentamt

(19) European Patent Office

Office européen des brevets

(11) Publication number: **0 074 800**
A2

(12) **EUROPEAN PATENT APPLICATION**

(21) Application number: 82304733.7

(22) Date of filing: 08.09.82

(51) Int. Cl.³: **B 23 P 15/24**
**B 23 P 15/04**

(30) Priority: 11.09.81 GB 8127458

(43) Date of publication of application:
23.03.83 Bulletin 83/12

(84) Designated Contracting States:
CH DE FR IT LI SE

(71) Applicant: International Ceramics Limited

Denby Derby DE5 8NX(GB)

(72) Inventor: Lockley, Ralph
70 Ferrers Way
Ripley Derbyshire(GB)

(74) Representative: Drever, Ronald Fergus et al,
Swindell & Pearson 44, Friar Gate
Derby DE1 1DA(GB)

(54) Improvements in or relating to moulding methods.

(57) In a method of moulding a ceramic core for use in the production of precision equipment separable die parts of resin are formed from a master model and resin oddsides are cast from the die parts. Further die parts formed from the oddsides are faced with nickel by electroforming and the faced die is then used for high speed injection moulding. Required slight changes in shape of the core can be obtained by altering the shape of the cast oddside and then casting new metal faced die parts.

./...

Croydon Printing Company Ltd.

*Fig. 1*

## Improvements in or relating to
## Moulding Methods

This invention is concerned with improvements in or relating to moulding methods and is particularly concerned with methods of moulding ceramic cores for use in the production of precision equipment such as turbine blades and vanes.

In the production of turbine blades and vanes, the ceramic cores have the precise form of the blades, being used in a lost wax process for moulding the inner passages of the blades and vanes. To produce the core by means of an injection moulding process, enabling high speed injection, it is conventional to produce, by compter aided design, a master model of the turbine blade in metal, and then form a metal die from the master model by a spark erosion process. The use of a metal die to mould the ceramic core is advantageous in that the metal is a good heat conductor enabling a fast production rate and also the metal is abrasion resistant. Such a method is however disadvantageous when making further dies from the master model as tolerances alter, and when any alteration of a core shape is required, this may then require the production of a new master model and die which can prove costly.

According to one aspect of the present invention there is provided a method of moulding an article, said method comprising forming a die having separable first die parts, casting an oddside from each of the first die parts, and, from each of the oddsides, facing a cast second die part with metal by electroforming, and subsequently injection moulding the article in the faced die.

0074800

Preferably the first die parts and the oddsides are formed of a resin base.

Preferably also, a coating of nickel is backed by copper and then backed by resin to form the second die parts. Alternatively the coating of nickel is backed by copper and then backed by steel.

According to another aspect of the invention there is provided a method of moulding an article, said method comprising forming a die having separable first die parts, casting an oddside from each of the first die parts and facing the cast oddside with metal, forming second die parts of a stable free-cutting material from the faced oddsides, and subsequently injection moulding the article in the die comprising the second die parts.

Embodiments of the present invention will now be described by way of example only with reference to the accompanying drawings in which:-

Fig. 1 is a diagrammatic view showing the various stages in a method according to a first embodiment of the invention; and

Fig. 2 is a diagrammatic view showing the stages in a method according to a second embodiment of the invention.

In the production of high precision moulded articles such as turbine blades and vanes for use in aircraft, the lost wax moulding process is used, with a ceramic core.

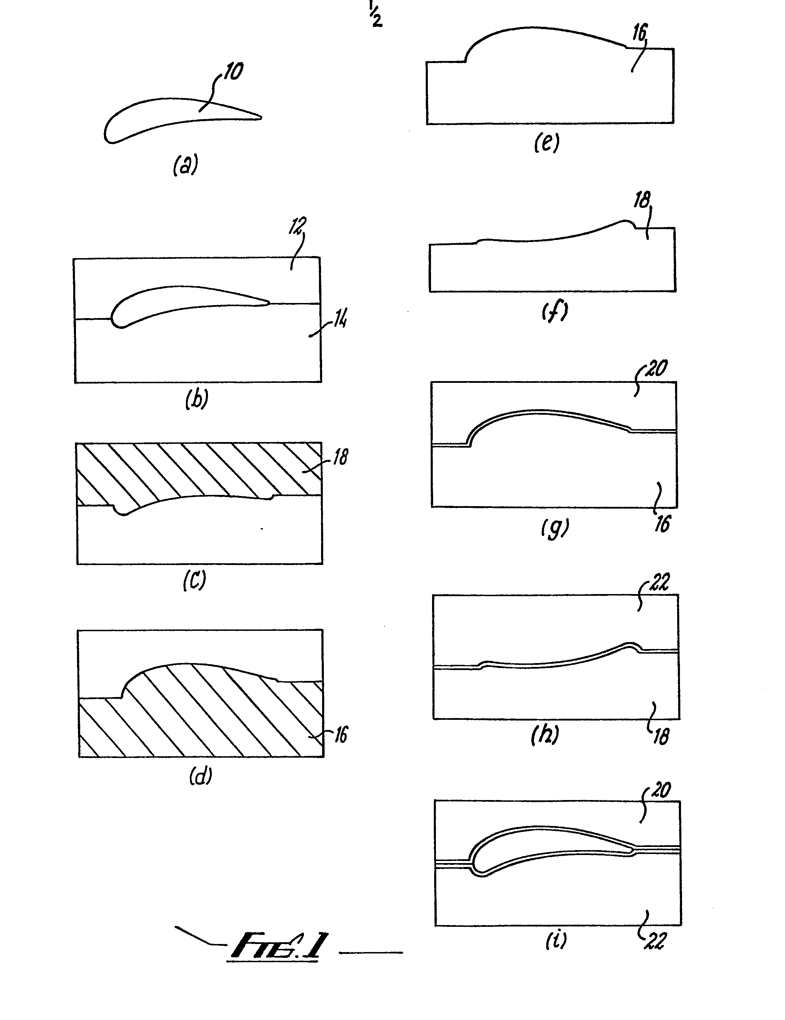

Referring to Fig. 1 of the drawings, a master model 10 of the article is initially computer aided designed and formed of a suitable stable, free-cutting material. A die formed of two separable parts 12, 14, and preferably in resin, is formed on the model 10, the parts 12, 14 subsequently being separated and each being used to cast respectively a male oddside 16 and a female oddside 18, again preferably in resin.

A female die part 20 is then cast from the male oddside 16 and is formed on its moulding face, with a layer or shell of metal, preferably nickel, backed by a free-cutting material, for example resin. Similarly a male die part 22 is cast from the female oddside 18 and is formed on its moulding face with a layer of metal, preferably nickel, backed by copper and then backed by resin. The metal facing or coating on each die part 20, 22 is formed by means of a conventional electroforming process. A steel backing can also be used by copper plating the rear of the electroformed shell and using that as a spark erosion electrode against a steel block. The backing is then fixed to the shell by a thin layer of epoxy resin or in other ways.

The faced die is then used for injection moulding of the ceramic cores, the metal facing acting as a heat conductor and also being abrasion resistant, enabling high speed injection. A die formed completely of resin can only be used in a low pressure injection moulding process and is not abrasion resistant.

In a variation, the die parts 12, 14 may be machined directly as a core tool by a conventional technique using computer aided design, the oddsides being subsequently cast from the respective core tool parts and the faced die subsequently formed as described in relation to Fig. 1.

When the shape of the core involves holes which define pedestals in the die of a pitch less than twice the diameter, or a diameter smaller than 0.100 inches, or when certain ribs are required on the die, the method of the first embodiment cannot be employed as difficulties arise in providing the metal facing on the die because of the dimensions and the areas of weakness which would develop.

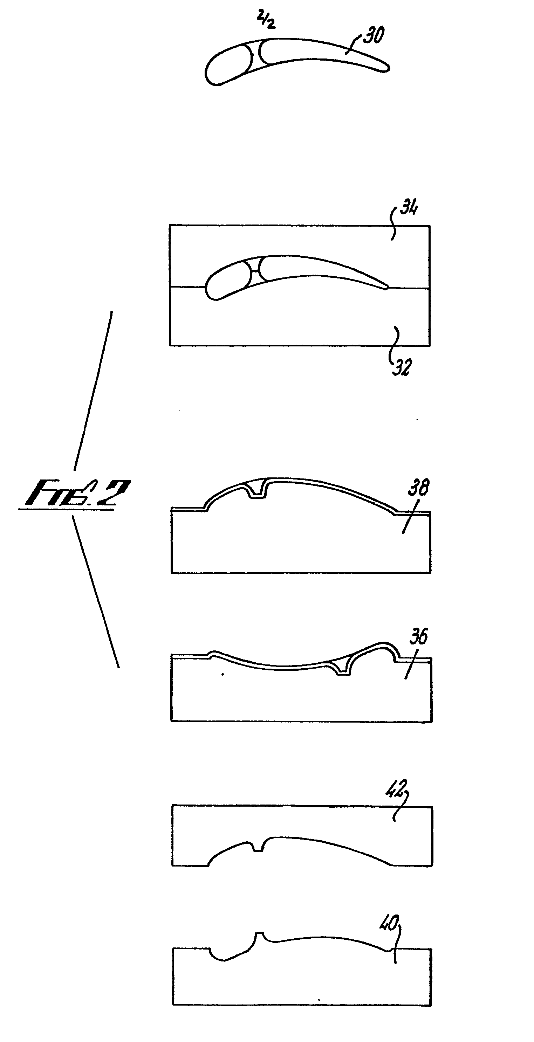

Therefore, referring to Fig. 2 of the drawings, a master model 30 can again be initially computer aided designed and machined in a free-cutting material, and a die comprising separable parts 32, 34 is formed from the model 30 and is preferably of resin. From each of the die parts 32, 34 a respective female oddside 36 and a male oddside 38 are cast and each has on its profiled face with a coating of metal, preferably copper, and the copper is backed by the resin. The metal facing or coating is formed on each of the oddsides 36, 38 by a means of a conventional electroforming process.

Each of the faced oddsides 36, 38 is then used to produce a respective hard die part 40, 42 by spark erosion. The hard die parts form a die which is used for injection moulding of the ceramic cores. The faced oddsides can be used to produce any desired number of identical dies.

If it is desired to slightly alter the shape of a core, it is possible to accommodate this without the requirement of producing a new master model or new core tool. The cast oddsides in the first embodiment and the cast resin die in the second embodiment can be altered as desired, following which respectively new metal faced die parts or new metal faced oddsides are cast.

Such alteration of shape can therefore be effected more easily and much less expensively than herebefore.

It is to be appreciated that the method of the invention can be utilised to produce metal faced dies for moulding the wax patterns which surround the ceramic core as well as the dies for moulding the cores themselves.

Various modifications may be made without departing from the invention. For example aluminium may be used instead of resin and the facing may be of silver or copper as opposed to nickel.

## Claims

1.    A method of moulding on article, said method comprising forming a die having seporable first die ports, and being characterised by casting on oddside (16,18) from each of the first die ports (12,14), and, from each of the oddsides (16,18), focing a cast second die port (20,22) with metal by electroforming, and subsequently injection moulding the article in the foced die.

2.    A method occording to cloim 1 chorocterised in thot the oddsides (16,18) ore formed of o resin bose.

3.    A method occording to cloim 1 or 2 chorocterised in thot the second die ports (20,22) ore foced with o cooting of nickel.

4.    A method occording to cloim 3 chorocterised in thot the cooting of nickel is bocked by copper ond then bocked by resin.

5.    A method occording to ony of the preceding cloims chorocterised in thot the metol focing is formed by electroforming.

6.    A method occording to ony of cloims 1 to 3, chorocterised in thot the cooting of nickel is bocked by copper ond then bocked by steel.

7.    A method of moulding on article, soid method comprising forming o die hoving seporable first die ports, and being chorocterised by costing on oddside (36,38) from each of the first die ports (32,34) ond focing the cost oddside (36,38) with metal, forming second die parts (40,42) of a stable
free cutting material from the faced oddsides (36,38) and
subsequently injection moulding the article in the die
comprising the second die parts (40,42).

8.   A method according to claim 7, characterised in that
the oddsides (36,38) are faced with a coating of copper.

9.   A method according to claim 8, characterised in that
the copper coating is backed by resin.

10.  A method according to any of claims 7 to 9, characterised in that the second die parts (40,42) are produced by
spark erosion.

0074800

½

(a)

(b)

(c)

(d)

(e)

(f)

(g)

(h)

(i)

Fig.1

2/2

30

34

32

38

36

_FIG. 2_

42

40